(19) Europäisches Patentamt
European Patent Office
Office européen des brevets

(11) **EP 4 613 890 A1**

(12) **EUROPEAN PATENT APPLICATION**
published in accordance with Art. 153(4) EPC

(43) Date of publication:
**10.09.2025 Bulletin 2025/37**

(21) Application number: **23907288.7**

(22) Date of filing: **04.09.2023**

(51) International Patent Classification (IPC):
**C22C 14/00** (2006.01)        **C22F 1/18** (2006.01)
**H01M 8/0206** (2016.01)      **H01M 8/0228** (2016.01)

(52) Cooperative Patent Classification (CPC):
**C22C 14/00; C22F 1/18; H01M 8/0206;
H01M 8/0228**

(86) International application number:
**PCT/KR2023/013182**

(87) International publication number:
**WO 2024/136000 (27.06.2024 Gazette 2024/26)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **21.12.2022 KR 20220180014**

(71) Applicant: POSCO Co., Ltd
**Pohang-si, Gyeongsangbuk-do 37859 (KR)**

(72) Inventors:
- **KIM, Jonghee**
  **Daejeon 34200 (KR)**
- **SEO, Bosung**
  **Pohang-si Gyeongsangbuk-do 37656 (KR)**
- **KIM, Hak**
  **Pohang-si Gyeongsangbuk-do 37656 (KR)**
- **KIM, Jinsuk**
  **Pohang-si Gyeongsangbuk-do 37671 (KR)**

(74) Representative: **Nederlandsch Octrooibureau
P.O. Box 29720
2502 LS The Hague (NL)**

(54) **TITANUIM PLATE WITH EXCELLENT SURFACE CONDUCTIVITY AND EXCELLENT DURABILITY FOR FUEL CELL SEPARATOR AND MANUFACTURING METHOD THEREFOR**

(57)    Disclosed herein is a titanium plate with excellent surface conductivity and excellent durability. The titanium plate for a fuel cell separator according to the present disclosure includes: a titanium (Ti) base material including, in mass%, Si: 0.001 to 0.09%, a remainder Ti, and inevitable impurities; and a surface coating layer in which a content of each of Ti, Si, and O exceeds 0% when measured by angle-resolved X-ray photoelectron spectroscopy using an Al-K$\alpha$ X-ray source under a condition where a photoelectron takeoff angle is 45°.

The surface coating layer satisfies a following formula (1):

$$\text{Formula (1)} \quad 0.2 \leq \text{Si(at.\%)}/[\text{Ti(at.\%)}+\text{Si(at.\%)}] \leq 0.8$$

EP 4 613 890 A1

**(Cont. next page)**

# FIG. 1

## Description

[Technical Field]

The present disclosure relates to a separator material with excellent surface conductivity and durability, and more particularly, to a titanium plate with excellent surface conductivity and excellent durability for a fuel cell separator even in high potential fuel cell operating environment without a coating process.

[Background Art]

The present disclosure is a result of the following research project.

(National Research and Development Project that supports the present disclosure)

(Project Identification Number) 1415170001

(Project Number) 20012130

(Ministry Name) Ministry of Trade, Industry and Energy

(Proj ect Management (Specialized) Agency Name) Korea Evaluation Institute of Industrial Technology

(Research Project Title) Technology Development Project for Next-Generation Fuel Cell System for Hydrogen Vehicles

(Research Task Title) Development of High-Performance Separator Based on Lightweight Alternative Materials

(Contribution Rate) 1/1

(Project Execution Organization Name) POSCO Co., LTD.

(Research Period) May 1, 2020 ~ Dec. 31, 2024

Titanium is being considered as a fuel cell separator material due to its excellent corrosion resistance. However, although corrosion resistance is ensured by a passive film formed on a surface layer, titanium has a disadvantage in that a low contact resistance may not be secured due to its semiconductor characteristics.
To overcome the above, Patent Document 1 discloses a technology for applying graphite powder to a titanium surface. However, the manufacturing process of the technology is complicated and conductivity may be impaired due to delamination, etc.
In addition, Patent Document 2 discloses a technology for forming a precious metal thin coating layer on a surface of a metal member, but the manufacturing cost is high.
In addition, Patent Document 3 discloses a technology for forming a phase including a $Ti_2O_3$ phase on a titanium surface. However, a reduction treatment process using carbon is required in the manufacturing process, and there is a limit to ensuring conductivity.
In addition, Patent Document 4 discloses a process for applying carbon black to a surface of a titanium substrate and performing heat treatment, but an additional process of applying carbon black is required, thus increasing manufacturing cost.

(Prior art documents)

Patent document 1: Japanese Patent Registration No. 5342462 (Publication date: April 14, 2011)

Patent document 2: Japanese Patent Publication No. 2003-105523 (Publication date: April 9, 2003)

Patent document 3: Korean Patent Publication No. 10-2019-0095472 (Publication date: Aug. 14, 2019)

Patent document 4: Japanese Patent Publication No. 2019-133863 (Publication date: Aug. 8, 2019)

[Disclosure]

[Technical Problem]

To overcome the above, the present disclosure provides a fuel cell separator material that may simultaneously secure a manufacturing cost, conductivity, and durability by controlling a composition of a titanium (Ti) base material and easily forming a conductive oxide layer on a surface coating layer without additional coating.

[Technical Solution]

According to an embodiment of the present disclosure, a titanium plate for a fuel cell separator may include: a titanium (Ti) base material including, in mass%, Si: 0.001 to 0.09%, a remainder Ti, and inevitable impurities; and a surface coating layer in which a content of each of Ti, Si, and O exceeds 0% when measured by angle-resolved X-ray photoelectron spectroscopy using an Al-K$\alpha$ X-ray source under a condition where a photoelectron takeoff angle is 45°.
The surface coating layer satisfies a following formula (1).

$$\text{Formula (1)} \quad 0.2 \leq Si(at.\%)/[Ti(at.\%)+Si(at.\%)] \leq 0.8$$

In addition, according to an embodiment of the present disclosure, the surface coating layer may have a thickness of 3 to 1000 nm.
In addition, according to an embodiment of the present disclosure, a surface contact resistance may be 10 $m\Omega cm^2$ or less.
According to another embodiment of the present disclosure, a method of manufacturing a titanium plate for a fuel cell separator includes: preparing a Ti base material including, in mass%, Si: 0.001 to 0.09%, a remainder Ti, and inevitable impurities;

melting, hot rolling, and cold rolling the Ti base material; and

heat-treating the rolled Ti base material in an atmosphere of 500 to 900° C in which an oxygen partial pressure is controlled from $10^{-30}$ bar to $10^{-10}$ bar for 10 seconds to 1 hour to form a coating layer,

wherein the surface coating layer has a content of each of Ti, Si, and O exceeding 0% when measured by angle-resolved X-ray photoelectron spectroscopy using an Al-K$\alpha$ X-ray source under a condition where a photoelectron takeoff angle is 45°, and

the surface coating layer satisfies a following formula (1):

$$\text{Formula (1)} \quad 0.2 \leq Si(at.\%)/[Ti(at.\%)+Si(at.\%)] \leq 0.8$$

In addition, according to an embodiment of the present disclosure, the surface coating layer may have a thickness of 3 to 1000 nm.
In addition, according to an embodiment of the present disclosure, a surface contact resistance may be 10 $m\Omega cm^2$ or less.

[Advantageous Effects]

According to the present disclosure, a titanium plate with excellent surface conductivity and excellent durability for a fuel cell separator may be provided.

[Description of Drawings]

FIG. 1 is a comparison of surface coating layer components observed when measured by angle-resolved X-ray photoelectron spectroscopy using an Al-K$\alpha$ X-ray source under a condition where a photoelectron takeoff angle is 45° for comparative examples and inventive examples.

FIG. 2 is an image of surface layer and base material portions of inventive example 1 observed with a transmission electron microscope.

[Mode for Disclosure]

Hereinafter, embodiments of the present disclosure will be described in detail with reference to the accompanying drawings. The following embodiments are presented to fully convey the spirit of the present disclosure to those skilled in the art to which the present disclosure pertains, and are not limited to those shown herein, but may be embodied in other forms.

The terms used herein are used only to describe particular embodiments and are not intended to limit the disclosure. It is to be understood that the singular forms are intended to include the plural forms as well, unless the context clearly dictates otherwise. It will be understood that the terms "include" and "have," are intended to indicate the presence of the features, numbers, steps, operations, components, parts, or combinations thereof disclosed in the disclosure, but do not preclude the presence or addition of one or more other elements.

According to an embodiment of the present disclosure, a titanium plate for a fuel cell separator includes: a Ti base material including, in mass%, Si: 0.001 to 0.09%, a remainder Ti, and inevitable impurities; and a surface coating layer in which a content of each of Ti, Si, and O exceeds 0% when measured by angle-resolved X-ray photoelectron spectroscopy using an Al-K$\alpha$ X-ray source under the condition where a photoelectron takeoff angle is 45°, wherein the surface coating layer satisfies the following formula (1):

$$\text{Formula (1)} \quad 0.2 \leq \text{Si(at.\%)}/[\text{Ti(at.\%)}+\text{Si(at.\%)}] \leq 0.8$$

The inventors of the present disclosure conducted a study to secure conductivity of a coating layer formed on a surface layer without a separate coating process, and found the composition of the Ti base material and the elemental conditions that implement conductivity in the surface coating layer. Specifically, the inventors of the present disclosure discovered that the titanium plate including Si: 0.001~0.09% in the base material may exhibit conductivity when the Si component is concentrated on the surface layer under temperature conditions of low oxygen partial pressure and forms TiSixOy oxide. The reason for exhibiting conductivity is apparent to be that a bandgap energy is lowered by the Si doping effect, thereby changing to a conductive characteristic.

A lower limit of the Si content in the base material is limited to 0.001% in mass % or more, because the lower limit is a minimum content value that the Si doping effect, which indicates the conductivity of the surface layer, may exhibit. An upper limit is limited to 0.09%, because the upper limit could adversely affect the formability of material when the Si content exceeds 0.09%.

The composition of the surface coating layer to exhibit conductivity may satisfy the following formula (1):

$$\text{Formula (1)} \quad 0.2 \leq \text{Si(at.\%)}/[\text{Ti(at.\%)}+\text{Si(at.\%)}] \leq 0.8$$

In order to show the conductive characteristics by Si doping, the lower limit of formula (1) is set to 0.2 or more, and in a case where the upper limit exceeds 0.8, the conductive characteristics are changed to semiconductor characteristics due to the concentration of Si, and thus the conductivity deteriorates. Accordingly, the upper limit is limited to 0.8 or less.

The composition of the surface coating layer essentially includes Ti, Si, and O, but may further include at least one type of C or N, and may optionally include Fe at 0.06% or less.

In addition, according to an embodiment of the present disclosure, the surface coating layer may have a thickness of 3 to 1000 nm.

The inventors of the present disclosure limited the thickness to 3 to 1000 nm, because they found that the thickness of the surface coating layer that maintains conductivity in a fuel cell environment requires to be at least 3 nm, and in a case where the thickness is less than 3 nm, the coating layer is destroyed, resulting in a decrease in performance due to restoration of the $TiO_2$ coating layer. The inventors of the present disclosure limited a maximum thickness of the formed coating layer to 1000 nm, which is a limit value that does not cause defects such as cracks, when applying the separator molding process after manufacturing the titanium plate.

The titanium base material may be composed of pure titanium material or a titanium alloy, and should necessarily include Si: 0.001 to 0.09% by mass %.

According to an embodiment of the present disclosure, the titanium plate for a fuel cell separator may have a surface contact resistance of 10 m$\Omega$cm$^2$ or less.

According to an embodiment of the present disclosure, a method of manufacturing a titanium plate for a fuel cell separator includes: preparing a Ti base material including, in mass%, Si: 0.001 to 0.09%, a remainder Ti, and inevitable impurities;

melting, hot rolling, and cold rolling the Ti base material; and

heat-treating the rolled Ti base material in an atmosphere of 500 to 900° C in which an oxygen partial pressure is controlled from $10^{-30}$ bar to $10^{-10}$ bar for 10 seconds to 1 hour to form a coating layer;

wherein the surface coating layer has a content of each of Ti, Si, and O exceeding 0% when measured by angle-resolved X-ray photoelectron spectroscopy using an Al-K$\alpha$ X-ray source under the condition where a photoelectron takeoff angle is 45°, and

the surface coating layer satisfies the following formula (1):

$$\text{Formula (1)} \quad 0.2 \leq \text{Si(at.\%)}/[\text{Ti(at.\%)}+\text{Si(at.\%)}] \leq 0.8$$

The oxygen partial pressure is limited to forming the surface coating layer in the atmosphere of 500 to 900°C from $10^{-30}$ bar to $10^{-10}$ bar for 10 seconds to 1 hour for the following reasons: In the case of $10^{-10}$ bar or less, Si may be diffused onto the Ti, O compound layer on the surface and may be doped, and the case is the maximum oxygen partial pressure condition that allows Si diffusion, and in the case of an oxygen partial pressure of less than $10^{-30}$ bar, an excessive amount of hydrogen, CO, CO2, methane, propane gas, and the like is used to implement an atmosphere, which causes high manufacturing costs. A heating temperature for Si diffusion is limited to 500°C or higher, and when the heating temperature exceeds 900°C, the formability deteriorates due to excessive grain growth. Accordingly, the upper limit is limited to 900°C. In addition, a heating holding time is set in consideration of the minimum to maximum holding time due to Si doping in the surface coating layer.

Hereinafter, the present disclosure is described in more detail with reference to preferred examples.

{Examples}

The following 30 kg ingot was vacuum melted, hot rolled, annealed, and cold rolled to produce a titanium cold rolled (0.2 mm t) plate having the composition shown in Table 1.

[Table 1]

| Material | Ti(wt.%) | Si(wt.%) | Fe(wt.%) |
|---|---|---|---|
| Invention 1 | bal. | 0.001 | 0.06 |
| Invention 2 | bal. | 0.02 | - |
| Comparison 1 | bal. | - | 0.065 |

Table 2 below shows the results of evaluating the composition and properties of the surface coating layer after cold rolling and exposure to atmospheric heating for the titanium plate.

[Table 2]

| | Material | Heating temperature( °C) | Holding time (sec) | Oxygen partial pressure in atmosphere (bar) | Surface coating layer Si(at.%)/[Ti(at.%)+Si(at.%)] | Thickness of surface coating layer (nm) | Initial contact resistance (mΩcm²) @1MPa | Contact resistance after durability testing (mΩcm²) @1MPa |
|---|---|---|---|---|---|---|---|---|
| Comparative example 1 | Invention 1 | 800 | 30 | 2x10⁻⁸ | 0.01 | 100 | 45 | 150 |

(continued)

| | Material | Heating temperature( °C) | Holding time (sec) | Oxygen partial pressure in atmosphere (bar) | Surface coating layer Si(at.%)/[Ti(at.%)+Si(at.%)] | Thickness of surface coating layer (nm) | Initial contact resistance (mΩcm$^2$) @1MPa | Contact resistance after durability testing (mΩcm$^2$) @1MPa |
|---|---|---|---|---|---|---|---|---|
| Comparative example 2 | Invention 2 | 600 | 30 | $8 \times 10^{-5}$ | 0 | 65 | 100 | 200 |
| Comparative example 3 | Comparison 1 | 500 | 30 | $3.2 \times 10^{-9}$ | 0 | 10 | 250 | 350 |
| Inventive example 1 | Invention 1 | 800 | 30 | $1.2 \times 10^{-25}$ | 0.42 | 117 | 7 | 7.5 |
| Inventive example 2 | Invention 1 | 650 | 30 | $2 \times 10^{-12}$ | 0.25 | 25 | 6.6 | 7.1 |
| Inventive example 3 | Invention 2 | 850 | 60 | $1.2 \times 10^{-23}$ | 0.78 | 250 | 6 | 6.5 |
| Inventive example 4 | Invention 2 | 700 | 60 | $3 \times 10^{-22}$ | 0.6 | 40 | 7.3 | 7.7 |

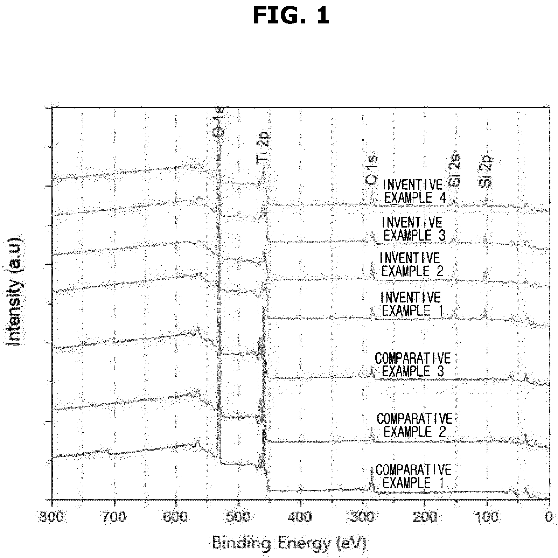

According to the examples, the cold-rolled plate was cut into 10 cm x 10 cm, ultrasonically cleaned in acetone for 1 hour in a laboratory, and then heat-treated in an atmosphere furnace controlled in a low oxygen partial pressure atmosphere. In order to control the low oxygen partial pressure atmosphere, Ar, hydrogen, CO, $CO_2$, methane, and propane gases were used. The oxygen partial pressure was measured using an oxygen partial pressure meter from Metlor. After the heat treatment, the composition of the surface coating layer of the specimen was analyzed for by angle-resolved X-ray photoelectron spectroscopy using an Al-K$\alpha$ X-ray source under the condition where a photoelectron takeoff angle is 45°. FIG. 1 shows the composition of the surface coating layer. As shown in inventive examples 1 to 4, a Si component was detected in the surface layer, and the component ratio thereof is as shown in Table 2.

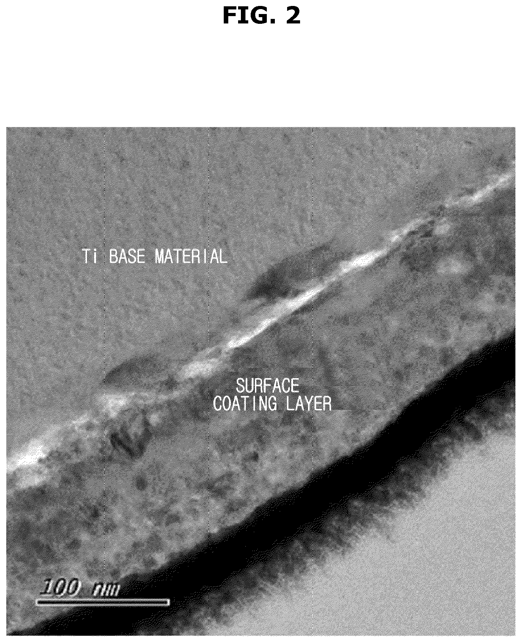

FIG. 2 is an image of the surface coating layer and the base material portion for inventive example 1 observed with a transmission electron microscope, and a thickness of the formed coating layer was observed.

For contact resistance evaluation, the specimen was cut into 5 cm x 5 cm, and carbon paper (GDL)/specimen/carbon paper (GDL)/specimen/carbon paper (GDL) was placed inside the upper/lower Cu plate, and after applying current to the Cu plate, a voltage terminal was connected to the specimen to evaluate an initial contact resistance. The specimen for which the initial contact resistance had been evaluated was immersed in a 0.05 M sulfuric acid + 2 ppm hydrofluoric acid solution for 100 hours to evaluate durability in the fuel cell operating environment, and then the contact resistance was re-evaluated to observe any change.

Inventive examples 1 to 4 satisfy the composition, and the oxygen partial pressure in the atmosphere satisfy in an atmosphere of 500 to 900 °C from $10^{-30}$ bar to $10^{-10}$ bar for 10 seconds to 1 hour, and formula (1) satisfies 0.1 to 3, and thus the initial surface contact resistance and the contact resistance after the durability test satisfy 10 mΩcm$^2$ or less.

By contrast, in comparative examples 1 to 3, the oxygen partial pressure in the atmosphere exceeded $10^{-10}$ bar and formula (1) was below 0.2, and thus the initial surface contact resistance and the contact resistance after the durability test exceeded 10 mΩcm$^2$.

Although embodiments of the disclosure have been described with reference to the accompanying drawings, a person having ordinary skilled in the art will appreciate that other specific modifications may be easily made without departing from the technical spirit or essential features of the disclosure. Accordingly, the foregoing embodiments should be regarded as illustrative rather than limiting in all aspects.

**Claims**

1.  A titanium plate for a fuel cell separator, the titanium plate comprising:

    a titanium (Ti) base material comprising, in mass%, Si: 0.001 to 0.09%, a remainder Ti, and inevitable impurities; and
    a surface coating layer in which a content of each of Ti, Si, and O exceeds 0% when measured by angle-resolved X-ray photoelectron spectroscopy using an Al-K$\alpha$ X-ray source under a condition where a photoelectron takeoff angle is 45°, and
    wherein the surface coating layer satisfies a following formula (1):

    $$\text{Formula (1)} \quad 0.2 \leq Si(at.\%)/[Ti(at.\%)+Si(at.\%)] \leq 0.8$$

2.  The titanium plate for the fuel cell separator of claim 1, wherein the surface coating layer has a thickness of 3 to 1000 nm.

3.  The titanium plate for the fuel cell separator of claim 1, wherein a surface contact resistance is 10 m$\Omega$cm$^2$ or less.

4.  A method of manufacturing a titanium plate for a fuel cell separator, the method comprising:

    preparing a Ti base material comprising, in mass%, Si: 0.001 to 0.09%, a remainder Ti, and inevitable impurities;
    melting, hot rolling, and cold rolling the Ti base material; and
    heat-treating the rolled Ti base material in an atmosphere of 500 to 900° C in which an oxygen partial pressure is controlled from $10^{-30}$ bar to $10^{-10}$ bar for 10 seconds to 1 hour to form a coating layer,
    wherein the surface coating layer has a content of each of Ti, Si, and O exceeding 0% when measured by angle-resolved X-ray photoelectron spectroscopy using an Al-K$\alpha$ X-ray source under a condition where a photoelectron takeoff angle is 45°, and
    the surface coating layer satisfies a following formula (1):

    $$\text{Formula (1)} \quad 0.2 \leq Si(at.\%)/[Ti(at.\%)+Si(at.\%)] \leq 0.8$$

5.  The method of claim 4, wherein the surface coating layer has a thickness of 3 to 1000 nm.

6.  The method of claim 4, wherein a surface contact resistance is 10 m$\Omega$cm$^2$ or less.

# FIG. 1

# FIG. 2

## INTERNATIONAL SEARCH REPORT

| International application No. |
| --- |
| **PCT/KR2023/013182** |

| | |
| --- | --- |
| **A. CLASSIFICATION OF SUBJECT MATTER** | |
| **C22C 14/00**(2006.01)i; **C22F 1/18**(2006.01)i; **H01M 8/0206**(2016.01)i; **H01M 8/0228**(2016.01)i | |
| According to International Patent Classification (IPC) or to both national classification and IPC | |

| **B. FIELDS SEARCHED** |
| --- |
| Minimum documentation searched (classification system followed by classification symbols) |
| C22C 14/00(2006.01); C22C 38/00(2006.01); C22C 38/50(2006.01); C23C 28/00(2006.01); C23C 8/10(2006.01); C25B 11/10(2006.01); H01M 8/02(2006.01); H01M 8/0228(2016.01) |
| Documentation searched other than minimum documentation to the extent that such documents are included in the fields searched |
| Korean utility models and applications for utility models: IPC as above<br>Japanese utility models and applications for utility models: IPC as above |
| Electronic data base consulted during the international search (name of data base and, where practicable, search terms used) |
| eKOMPASS (KIPO internal) & keywords: 규소(silicon), 티타늄(titanium), 피막(film), 저항(resistance), 압연(rolling), 열처리 (heat treatment) |

**C. DOCUMENTS CONSIDERED TO BE RELEVANT**

| Category* | Citation of document, with indication, where appropriate, of the relevant passages | Relevant to claim No. |
| --- | --- | --- |
| Y | KR 10-2006-0123779 A (JFE STEEL CORPORATION) 04 December 2006 (2006-12-04)<br>See paragraphs [0088]-[0090] and [0163]-[0185]. | 1-6 |
| Y | JP 2018-031057 A (KOBE STEEL LTD.) 01 March 2018 (2018-03-01)<br>See paragraphs [0014]-[0016]. | 1-6 |
| Y | JP 2009-170116 A (KOBE STEEL LTD.) 30 July 2009 (2009-07-30)<br>See paragraphs [0060]-[0062] and figure 2. | 4-6 |
| A | KR 10-2011-0036102 A (NIPPON STEEL CORPORATION) 06 April 2011 (2011-04-06)<br>See paragraphs [0051]-[0057] and figure 5. | 1-6 |
| A | US 2016-0308222 A1 (NIPPON STEEL & SUMITOMO METAL CORPORATION) 20 October 2016 (2016-10-20)<br>See paragraphs [0097]-[0107] and figures 1-3. | 1-6 |

| ☐ Further documents are listed in the continuation of Box C. | ☑ See patent family annex. |
| --- | --- |

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **18 December 2023** | **18 December 2023** |

| Name and mailing address of the ISA/KR | Authorized officer |
| --- | --- |
| **Korean Intellectual Property Office**<br>**Government Complex-Daejeon Building 4, 189 Cheongsa-**<br>**ro, Seo-gu, Daejeon 35208** | |
| Facsimile No. **+82-42-481-8578** | Telephone No. |

Form PCT/ISA/210 (second sheet) (July 2022)

# EP 4 613 890 A1

| | INTERNATIONAL SEARCH REPORT<br>Information on patent family members | | | International application No.<br>**PCT/KR2023/013182** | |

| Patent document<br>cited in search report | | | Publication date<br>(day/month/year) | Patent family member(s) | | | Publication date<br>(day/month/year) |
|---|---|---|---|---|---|---|---|
| KR | 10-2006-0123779 | A | 04 December 2006 | EP | 1726674 | A1 | 29 November 2006 |
| | | | | EP | 1726674 | B1 | 10 May 2017 |
| | | | | JP | 2005-302713 | A | 27 October 2005 |
| | | | | JP | 2010-280989 | A | 16 December 2010 |
| | | | | JP | 5109234 | B2 | 26 December 2012 |
| | | | | JP | 5434807 | B2 | 05 March 2014 |
| | | | | KR | 10-0851687 | B1 | 11 August 2008 |
| | | | | US | 2008-0233456 | A1 | 25 September 2008 |
| | | | | US | 2011-0024002 | A1 | 03 February 2011 |
| | | | | US | 8278009 | B2 | 02 October 2012 |
| | | | | WO | 2005-090626 | A1 | 29 September 2005 |
| JP | 2018-031057 | A | 01 March 2018 | CN | 109642273 | A | 16 April 2019 |
| | | | | CN | 109642273 | B | 09 March 2021 |
| | | | | EP | 3505646 | A1 | 03 July 2019 |
| | | | | EP | 3505646 | B1 | 05 January 2022 |
| | | | | JP | 6789035 | B2 | 25 November 2020 |
| | | | | KR | 10-2019-0039219 | A | 10 April 2019 |
| | | | | KR | 10-2190540 | B1 | 14 December 2020 |
| | | | | US | 2019-0203322 | A1 | 04 July 2019 |
| | | | | WO | 2018-038061 | A1 | 01 March 2018 |
| JP | 2009-170116 | A | 30 July 2009 | CN | 101483244 | A | 15 July 2009 |
| | | | | CN | 101483244 | B | 28 September 2011 |
| | | | | KR | 10-0997267 | B1 | 29 November 2010 |
| | | | | KR | 10-2009-0077678 | A | 15 July 2009 |
| | | | | US | 2009-0181283 | A1 | 16 July 2009 |
| KR | 10-2011-0036102 | A | 06 April 2011 | CN | 102171874 | A | 31 August 2011 |
| | | | | CN | 102171874 | B | 05 March 2014 |
| | | | | EP | 2337135 | A1 | 22 June 2011 |
| | | | | EP | 2337135 | B1 | 29 July 2015 |
| | | | | JP | 4782244 | B2 | 28 September 2011 |
| | | | | KR | 10-1319551 | B1 | 21 October 2013 |
| | | | | US | 2011-0177430 | A1 | 21 July 2011 |
| | | | | US | 8603268 | B2 | 10 December 2013 |
| | | | | WO | 2010-038544 | A1 | 08 April 2010 |
| US | 2016-0308222 | A1 | 20 October 2016 | CN | 105934842 | A | 07 September 2016 |
| | | | | CN | 105934842 | B | 13 November 2018 |
| | | | | EP | 3098885 | A1 | 30 November 2016 |
| | | | | EP | 3098885 | B1 | 03 April 2019 |
| | | | | JP | 5790906 | B1 | 07 October 2015 |
| | | | | KR | 10-1861032 | B1 | 24 May 2018 |
| | | | | KR | 10-2016-0098396 | A | 18 August 2016 |
| | | | | US | 10033052 | B2 | 24 July 2018 |
| | | | | WO | 2015-111652 | A1 | 30 July 2015 |

Form PCT/ISA/210 (patent family annex) (July 2022)

**REFERENCES CITED IN THE DESCRIPTION**

**Patent documents cited in the description**

- JP 5342462 B
- JP 2003105523 A
- KR 1020190095472
- JP 2019133863 A